# EUROPEAN PATENT SPECIFICATION

(11) **EP 2 945 218 B1**
(45) Date of publication and mention of the grant of the patent: **07.08.2019**
(21) Application number: 15166196.4
(22) Date of filing: 04.05.2015
(51) Int. Cl.: H01M 10/613, H01M 10/615, H01M 10/625, H01M 10/6556, H01M 10/6569, H01M 10/658, H01M 2/10, H01M 10/04, B60L 58/26, F28F 1/02, F28F 9/013

(54) **COOLING DEVICE**
KÜHLVORRICHTUNG
DISPOSITIF DE REFROIDISSEMENT

(30) Priority: 16.05.2014 DE 102014106936
(43) Date of publication of application: 18.11.2015
(73) Proprietor: Valeo Klimasysteme GmbH, 96476 Bad Rodach (DE)
(72) Inventor: Haussmann, Roland, 68169 Wiesloch (DE)
(74) Representative: Metz, Gaëlle

(56) References cited:
- EP-A1- 2 343 769
- EP-A1- 2 388 851
- WO-A1-2013/171205
- WO-A1-2015/071068

## Description

The invention relates to a cooling device for cooling a battery, in particular a vehicle traction battery.

Due to environmental damage caused by vehicles having pure internal combustion engines, the development of vehicle drives has become focussed increasingly on electric drives, which at least partially replace the conventional internal combustion engines. The electric drives typically have a traction battery sub-assembly, via which the electric drive generates its power. The traction battery sub-assembly here comprises at least one battery pack, which is constructed from at least one battery module comprising a number of battery cells, in particular prismatic battery cells. The used battery modules may be high-voltage batteries, which can have voltages from 130 to 360 V. Since the battery cells release heat as they are charged and discharged, the battery cells must be cooled so that the battery cells are kept in an optimal working range. This is achieved via a cooling device, through which a cooling fluid or a coolant flows. By cooling the battery cells the service life thereof is additionally extended. The battery cells typically must be held below 40 to 50 °C, this being dependent on the used battery type, for example Li-ion battery cells or nickel metal hydride (NiMH) battery cells.

It is known from the prior art, for example from EP2343769, that the cooling device has a plurality of cooling elements that are each pushed directly via a spring element against a side to be cooled of the battery module, such that good thermal contact is achieved. It has, however, proven to be disadvantageous that the resilient behaviour of the spring elements deteriorates over time. Further, the cooling devices known from the prior art have the disadvantage that they cannot be used in a flexible manner. This problem occurs in particular with unevennesses or different distances between the battery module and the opposite end of the spring element, whereby the spring force with which the cooling element is applied against the side to be cooled varies. This may mean that the thermal contact is not as good on account of a reduced spring force.

The object of the invention is to create a cooling device which in a lasting manner ensures constant thermal contacting of the side to be cooled and in addition can be used in a flexible manner, such that it can compensate for unevennesses.

The object of the invention is achieved by a cooling device for cooling a battery, in particular a vehicle traction battery, having at least one cooling element, through which a cooling fluid for transporting away thermal energy flows, and having a preload element and a carrier element, which has a contact surface for contacting the cooling element, the preload element loading the carrier element on the side opposite the contact surface, and the carrier element being formed from a material that has a lower thermal conductivity than the material from which the preload element is formed.

The invention thus creates a thermal insulation of the preload element with respect to the cooling element, which is exposed to the thermal loads, whereby it is ensured that the resilient properties of the preload element can be retained in a lasting manner. Furthermore, as a result of the carrier element the compressive force generated by the preload element is distributed uniformly onto the cooling element, such that this bears uniformly against the side to be cooled.

In particular the cooling elements are cooling elements that have a number of channels running parallel to one another, through which the cooling fluid flows.

Further, the thermal conductivity of the material of the carrier element may be less than 50 % of the thermal conductivity of the material from which the preload element is formed. A particularly good thermal insulation is thus created.

In accordance with one aspect of the invention the carrier element is arranged between the cooling element and the preload element. It is thus ensured in a simple manner that the preload element does not cooperate directly with the cooling element, whereby the thermal decoupling is ensured.

The material of the carrier element may be a material that has poorer electrical conductivities than the material of the cooling element or of the preload element. This produces an electrical insulation of the preload element with respect to the cooling element. Due to the electrical insulation by the carrier element, the preload element and the cooling element can be formed from materials that are most sensible for the use thereof, since there is no longer any need to take into account any interactions between the preload element and the cooling element, such as electrochemical corrosion. By way of example, the carrier element can be formed from a plastic, whereas the cooling element is formed from aluminium and the preload element is formed from steel.

In accordance with a further aspect of the invention the carrier element is coupled to the preload element, a pre-assembly unit with the preload element being formed in particular. As a result of the joint coupling the carrier element is reliably mounted in respect of the preload element. The development to form the pre-assembly unit offers the advantage that the carrier element can be inserted together with the preload element as the cooling device is assembled on the battery, thus facilitating the assembly process accordingly.

Further, the carrier element may have a first flexibility structure and/or the preload element may have a second flexibility structure. The respective flexibility structure is formed in such a way that it increases the flexibility of the carrier element and/or of the preload element, such that the carrier element and/or the preload element can adapt better to unevennesses. This improves the thermal contact.

In particular the first and/or the second flexibility structure has cutouts, fins and/or recesses. As a result of the cutouts, recesses and/or the fins, the carrier element and/or the preload element have/has an accordingly lower material thickness in certain regions, whereby the flexibility there is increased. The flexibility structure(s) can be formed in particular transversely and/or longitudinally to the longitudinal axis of the carrier element and/or of the preload element, thus increasing the flexibility in the direction perpendicular thereto.

In accordance with a further aspect of the invention the preload element has at least one bearing portion, preferably two bearing portions, via which the preload element bears against a side of the battery outer housing. The preload element is supported on the battery outer housing via the bearing portions, whereby it pushes the carrier element arranged at the other end of the preload element accordingly in the direction of the side to be cooled of the battery module.

In accordance with a further aspect of the invention the preload element has two free ends, which are bent over in such a way that they form the bearing portions, the free ends being bent over in particular in the direction towards one another. The same bearing conditions are thus always ensured via the bending over of the free ends, for example point or line contact. The bearing location travels in a defined manner with compression of the preload element.

The bent-over free ends are preferably round.

In particular the preload element is formed as a yoke spring having two free ends, at which the bearing portions are provided. A yoke spring is a simple embodiment of the preload element.

In the invention at least one pre-fixing element is provided, which cooperates with the preload element in such a way that the preload element is pre-fixed or preloaded. As a result of the preloading of the preload element, the preload element can have a sufficiently high spring force, even in the case of uneven bearing surfaces, which result in a greater distance or a greater spring travel, to still push the cooling element strongly against the side to be cooled of the battery pack. The difference of the spring force with long and short distance reduces enormously on account of the pre-fixing/preloading. The thermal contact of the cooling element on the side to be cooled thus increases, whereby the cooling device can be used in a flexible manner.

The at least one pre-fixing element has a hook-shaped portion for pre-fixing the preload element. The hook-shaped portion engages with the preload element so as to hold this securely in the preloaded state. In the preloaded state the cooling device preferably has a shorter height than the maximum distance between the battery outer housing and the battery module. Further, the hook-shaped portion can be used to form the pre-assembly unit.

In accordance with a further aspect of the invention the least one pre-fixing element is arranged on the carrier element, in particular on the side opposite the contact surface. The pre-fixing element can thus cooperate directly with the preload element, whereby the pre-fixing of the preload element is simplified accordingly, in particular in the case of the coupling of the preload element and of the carrier element.

The pre-fixing element can be formed in one piece with the carrier element.

Further, the carrier element and/or the at least one pre-fixing element may have a limit element for limiting a compression of the preload element, in particular a limit portion. This ensures that the preload element is not preloaded too strongly or compressed too strongly during installation, such that damage to the preload element can be effectively prevented as a result.

In accordance with a further aspect of the invention at least one heating element is provided. The heating element can be used at cooler ambient temperatures to heat the battery module or the battery cells of the battery module. The battery cells are thus operated in the optimal working range thereof.

The heating element can be arranged between the carrier element and the cooling element, in particular can be embedded in the carrier element. It is thus ensured that the preload element is also thermally decoupled from the heating element, whereby the resilient properties of the preload element are not exposed to any thermal influence and therefore do not deteriorate over time. As a result of the embedment of the heating element in the carrier element, said heating element can be assembled in a simple manner, since there is no need for an additional assembly of the heating element between the carrier element and the cooling element.

In accordance with a further aspect of the invention a number of cooling elements separate from one another are provided, which are assigned at least one carrier element and at least one preload element, in particular one carrier element and one preload element per cooling element. Depending on the dimensioning of the cooling elements, a number of cooling elements can be carried by one carrier element, the one carrier element at the same time being pushed in a preloaded manner against the cooling elements by a preload element, such that the cooling elements are pushed against the side to be cooled. Alternatively, however, a number of cooling elements separate from one another can also be provided, each of which is assigned a dedicated carrier element and a dedicated preload element.

Further advantages and properties of the invention will emerge from the following description and the drawings, to which reference is made. In the drawings:
- Figure 1 shows a cross-sectional view of a vehicle traction battery having a cooling device according to the invention in accordance with a first embodiment,
- Figure 2 shows an enlarged detailed view from Figure 1,
- Figure 3 shows a cross-sectional view of a cooling device according to the invention in accordance with a second embodiment,
- Figure 4 shows a cross-sectional view of a cooling device according to the invention in accordance with a third embodiment,
- Figure 5 shows a cross-sectional view of a vehicle traction battery sub-assembly having a cooling device according to the invention in accordance with a fourth embodiment,
- Figure 6 shows a graph showing the spring force of the preload element in accordance with the distance between the battery outer housing and the side to be cooled,
- Figure 7 shows a cross-sectional view of a vehicle traction battery sub-assembly having a cooling device according to the invention in accordance with a fifth embodiment,
- Figure 8 shows a cross-sectional view of a vehicle traction battery sub-assembly having a cooling device which is not part of the invention,
- Figure 9 shows a cross-sectional view of a vehicle traction battery sub-assembly having a cooling device according to the invention in accordance with a seventh embodiment,
- Figure 10 shows a side view of the sub-assembly comprising the carrier element and the preload element,
- Figure 11 shows a plan view of an underside of a spring element,
- Figure 12 shows a plan view of an underside of a carrier element,
- Figure 13 shows a cross-sectional view of a cooling device according to the invention having a carrier element according to Figure 12, and
- Figure 14 shows a cross-sectional view of a cooling device according to the invention in accordance with an eighth embodiment.

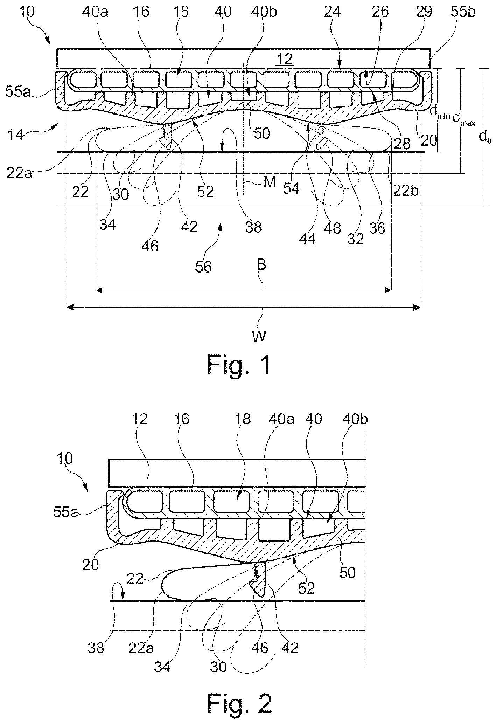

Figure 1 shows a vehicle traction battery sub-assembly 10, which comprises a battery having a battery module 12 and also a cooling device 14 in accordance with a first embodiment, the battery module 12 being shown only in part.

In the shown embodiment the cooling device 14 has a cooling element 16, which has a number of channels 18 parallel to one another, through which a cooling fluid flows in order to transport away the heat generated by the battery module 12. The cooling element 16 is for example an extruded, plate-shaped body permeated by channels 18.

The cooling device 14 also comprises a carrier element 20 and a preload element 22. The carrier element 20 is arranged in the shown embodiment between the cooling element 16 and the preload element 22, which is formed as a yoke spring and has two limbs 22a, 22b running in opposite directions.

The cooling element 16 has an even contact surface 24, via which the cooling element 16 bears against an even side 26 to be cooled of the battery module 12. The cooling element 16 also has an effective surface 28 opposite the contact surface 24, against which effective surface the carrier element 20 bears via contact surfaces 29.

The preload element 22 bears against the side of the carrier element 20 opposite the contact surfaces 29 and has a free end 30, 32 on each of the two limbs 22a, 22b.

In the shown embodiment the two free ends 30, 32 are bent over towards one another. The two free ends 30, 32 thus form rounded bearing portions 34, 36, via which the preload element 22 bears against a side 38 of a battery outer housing directed towards the cooling device 14 and is thus supported on this side 38 of the battery outer housing.

The preload element 22 is thus preloaded, such that it loads the carrier element 20 directly in the direction of the battery module 12, whereby the carrier element 20 pushes the cooling element 16 against the side 26 to be cooled. Good thermal contact between the cooling element 16 and the battery module 12 is thus achieved, since a uniform force is exerted onto the cooling element 16 via the carrier element 20.

The preload element 22 thus pushes the cooling element 16 merely indirectly against the side 26 to be cooled of the battery module 12.

The carrier element 20 is also formed from a material that has a poorer thermal conductivity than the cooling element 16 and/or the preload element 22. The preload element 22 is thus thermally decoupled from the cooling element 16, such that the resilient properties of the preload element 22 are not compromised overtime on account of thermal loads.

The thermal conductivity may be in particular 50% poorer than that of the preload element 22.

The carrier element 20 may additionally be formed from a material that serves simultaneously as electrical insulator, such that both a thermal insulation and an electrical installation between the cooling element 16 and the preload element 22 is created via the carrier element 20.

The cooling element 16 and the preload element 22 can thus be formed from materials that have the best properties for the respective field of use thereof, since a thermal or electrical or electrochemical interaction between the cooling element 16 and the preload element 22 is ruled out on account of the interposed carrier element 20.

By way of example, the carrier element 20 can be formed from a plastic, whereas the cooling element 16 is formed from aluminium and the preload element 22 is formed from steel, such that the cooling element 16 has a high thermal conductivity with low weight. The preload element 22, for example on account of the design as a steel spring, then has permanently constant resilient properties, such that the thermal contact between the cooling element 16 and the side 26 to be cooled is permanently good.

It is also clear from Figure 1 that the carrier element 20 has a first flexibility structure 40, which in the shown embodiment is directed towards the effective surface 28 of the cooling element 16 and via which the carrier element 20 contacts the cooling element 16. The contact surface 29 is therefore formed by the first flexibility structure 40.

In the shown embodiment the first flexibility structure 40 is provided by alternately formed fins 40a and cutouts 40b, which extend in the longitudinal direction of the carrier element 20. On account of the first flexibility structure 40, the carrier element 20 has a higher flexibility transversely to the orientation of the fins 40a and cutouts 40b, such that the thermal contact to the battery module 12 is improved on account of the higher flexibility.

By means of the first flexibility structure 40 a higher flexibility is provided on the one hand, and on the other hand the direct heat transfer between the carrier element 20 and the cooling element 16 is reduced hereby.

It is also shown that the carrier element 20 has two pre-fixing elements 42, 44, which extend from the side of the carrier element 20 opposite the contact surface 29 to the side 38 of the battery outer housing. The pre-fixing elements 42, 44 are formed in one piece with the carrier element 20 and are used to pre-fix the preload element 22, the pre-fixing elements 42, 44 for this purpose having a hook-shaped portion 46, 48, each of which is engaged with the preload element 22.

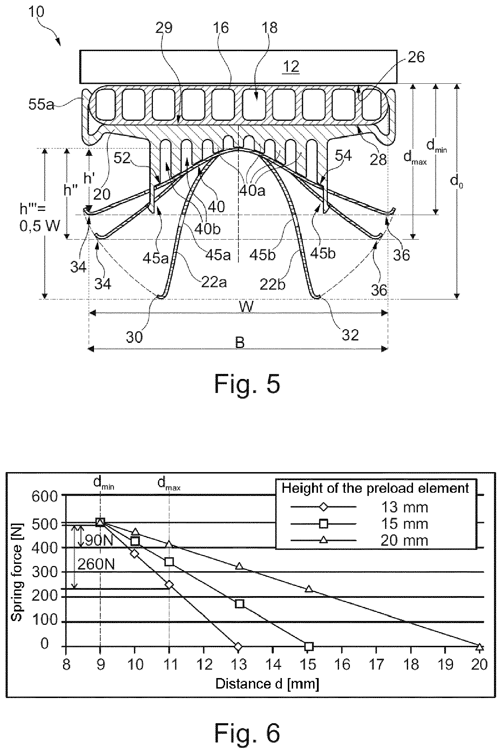

The preload element 22 for this purpose has, in the region of the pre-fixing elements 42, 44, an opening 45a, 45b (not shown here, see Figure 5) in the respective limb 22a, 22b, such that an edge of the respective opening 45a, 45b co-operates with the hook-shaped portion 46, 48 in such a way that the corresponding limb 22a, 22b bears in a pre-fixed manner at the assigned pre-fixing element 42, 44, in particular at the hook-shaped portion 46, 48.

The preload element 22 can thus be inserted in a preloaded position, whereby, in the event of unevennesses, more uniform compressive forces are produced and the assembly at the battery module 12 is facilitated at the same time. This will be explained later with reference to Figure 6.

The position of the limbs 22a, 22b illustrated in Figure 1 corresponds to the maximum compression that the preload element 22 can have with a minimum distance dₘᵢₙ between the side 38 of the battery outer housing and the side 26 to be cooled of the battery module 12.

In this position the two limbs 22a, 22b bear flat against a middle portion 50 of the carrier element 20. The middle portion 50 extends in the shown embodiment between the two pre-fixing elements 42, 44. The carrier element 20 thus has two limit portions 52, 54, which are formed by the middle portion 50 itself.

The limit portions 52, 54 are used to limit the maximum compression of the preload element 22, thus ruling out damage to the preload element 22.

Further, as a result of the pre-fixing elements 42, 44 and also the openings 45a, 45b, the preload element 22 together with the carrier element 20 can form a pre-assembly unit 56, which can be arranged in a simple manner on the battery module 12 or on the cooling element 16.

Further positions of the preload element 22 or limbs 22a, 22b thereof are clear from Figure 1 and are illustrated by dashed lines. These further positions show the following positionings starting from the minim deflection dₘᵢₙ:
A positioning of the cooling device 14 with a maximum distance dₘₐₓ between the side 38 of the battery outer housing (also illustrated in a dashed manner) and the side 26 to be cooled of the battery module 12.

The difference between the minimum distance dₘᵢₙ and the maximum distance dₘₐₓ corresponds here to typically occurring unevennesses of the battery outer housing, which have to be compensated for by the preload element 22.

Further, the preloaded position of the preload element 22 on account of the pre-fixing elements 42, 44 is illustrated, the sub-assembly comprising the carrier element 20 and the preloaded preload element 22, in particular the pre-assembly unit 56, assuming this position.

Furthermore, a position of the preload element 22 without pre-fixing and without contacting of the side 38 of the battery outer housing is shown, in which the two limbs 22a, 22b assume their non-preloaded position and have a distance d₀ from the battery module 12.

It is clear from the various positions that the preloading of the pre-fixed preload element 22 in particular is such that the height of the sub-assembly comprising the carrier element 20 and the preload element 22 is greater than the maximum distance dₘₐₓ between the side 38 of the battery outer housing and the side 26 to be cooled of the battery module 12.

Further, due to the fact that the free ends 30, 32 are bent over towards one another, two large bearing portions 34, 36 are provided on the one hand, and on the other hand the width B that the preload element 22 can occupy at most (with dₘₐₓ) is smaller than the width W of the cooling element 16. This enables a particularly compact construction of the cooling device 14. In addition, a lower spatial requirement is required at the battery outer housing, against which the preload element 22 bears.

In addition the carrier element 20 has two lateral contact portions 55a, 55b, which laterally fix the cooling element 16 from either side. The contact portions 55a, 55b are formed as protrusions formed approximately perpendicularly to the carrier element 20, which protrusions project approximately as far as the battery module 12.

The cooling device 14 is additionally formed symmetrically with respect to the centre axis M in the shown embodiment.

Figure 2 shows a detailed view of Figure 1, wherein the left of the two symmetrical halves from Figure 1 is shown.

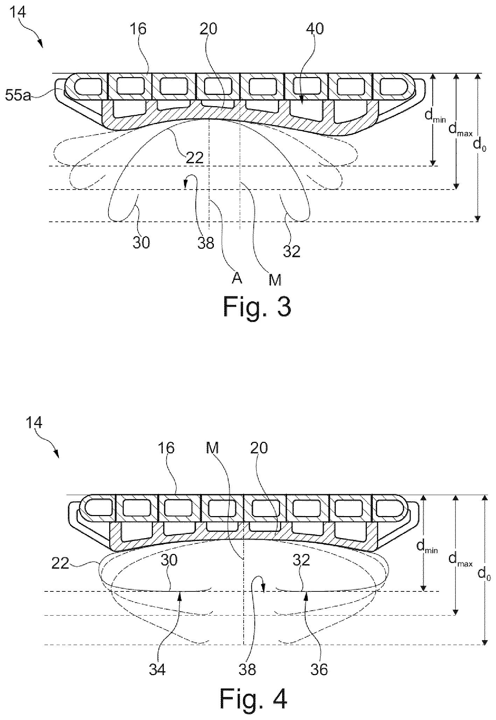

Figure 3 shows a second embodiment of the cooling device 14, which differs from the first embodiment in that the carrier element 20 in contrast to the first embodiment is formed asymmetrically.

The preload element 22 is also likewise arranged asymmetrically on the carrier element 20 in respect of the cooling element 16. This means that the centre M of the cooling element 16 does not coincide with the centre A of the preload element 22.

This may be advantageous when the battery outer housing has merely an even partial surface on the side 38, which is not centrally below the cooling element 16. The good thermal contact can thus be achieved on account of the asymmetric design, even in unfavourable circumstances.

Further, three positions of the preload element 22 are again shown, with minimum distance dₘᵢₙ, maximum distance dₘₐₓ, and in the unloaded state with the distance d₀, wherein this time the states with minimum distance dₘᵢₙ and maximum distance dₘₐₓ are illustrated in a dashed manner.

Figure 4 shows a third embodiment of the cooling device 14, in which the limbs 22a, 22b of the preload element 22 are longer compared with the first embodiment.

The free ends 30, 32 are bent over towards one another earlier in this embodiment, whereby a higher spring force compared with the first embodiment can be achieved. Further, the limbs 22a, 22b bear over a larger area against the carrier element 20, such that there is a particularly homogeneous introduction of force.

In this embodiment as well three positions of the preload element 22 are again shown, with minimum distance dₘᵢₙ, maximum distance dₘₐₓ, and in the unloaded state with the distance d₀, wherein, similarly to the first embodiment, the state with maximum distance dₘₐₓ and the unloaded state are illustrated in a dashed manner.

In particular, enlarged bearing portions 34, 36 of the preload element 22 compared with the first embodiment are produced on account of the free ends 30, 32 bent over earlier, as is clearly visible from the position with minimum distance dₘᵢₙ.

Figure 5 shows a fourth embodiment of the cooling device 14 in the case of a vehicle traction battery sub-assembly 10.

In this figure as well the three positions corresponding to the minimum distance dₘᵢₙ, the maximum distance dₘₐₓ and the unloaded state with the distance d₀ are again shown.

The fourth embodiment of the cooling device 14 differs more strongly from the first embodiment shown in Figure 1 since the carrier element 20 has the first flexibility structure 40 on the side directed towards the preload element 22, i.e. on the side opposite the bearing surface 29.

The first flexibility structure 40 is again formed by fins 40a and cutouts 40b extending in the longitudinal direction, such that the preload element 22 bears against the fins 40a of the first flexibility structure 40.

The contact surface 29 is now smooth, such that it bears flat against the effective surface 28 of the cooling element 16.

The openings 45a, 45b in the limbs 22a, 22b are also clearly illustrated in Figure 5, through which the pre-fixing element 42, 44 extend so as to preload the preload element 22. The preload position corresponds in the shown embodiment to that with the maximum distance dₘₐₓ, as can be seen from Figure 5.

Furthermore, the limit portions 52, 54 are formed in the shown embodiment on the pre-fixing elements 42, 44, which limit the compression of the preload element 22 in such a way that the preload element 22 cannot be compressed further. The limit portions 52, 54 are formed as shoulders on the hook-shaped portions 46, 48.

The fourth embodiment also differs from the first embodiment in that the preload element 22 has two free ends 30, 32, which compared with the first embodiment are bent over in opposite directions, such that they point away from one another. The bearing portions 34, 36 thus formed are much smaller than in the first embodiment.

In the shown embodiment the maximally preloaded preload element 22, when this bears against the limit portions 52, 54, has the same width B over the two bearing portions 34, 36 as the width W of the cooling element 16.

In this embodiment the height h' of the preload element 22 in the state with the shortest distance dₘᵢₙ is between 15 % and 25 % of the width W of the cooling element 16. The height h" of the preload element 22 in the state with the maximum distance dₘₐₓ is between 25 % and 30 % of the width W, whereas in the unloaded state with distance d₀ it corresponds to approximately half the width W of the cooling element 16.

This dimensioning of the preload element 22 offers the advantage that the difference of the spring force with different distances d between the side 26 to be cooled and the side 38 of the battery outer housing, which occur in the event of unevennesses, is smaller, as is clear from Figure 6.

With a tolerance of the distances between the side 26 to be cooled and the side 38 of the outer housing of dₘᵢₙ = 9 mm to dₘₐₓ = 11 mm and a maximum permitted spring force of the preload element 22 of 500 N, a spring force difference of 260 N between dₘᵢₙ and dₘₐₓ is given for a preload element 22 not preloaded by the pre-fixing elements 42, 44. By contrast the spring force difference of the preload element 22, when preloaded by the pre-fixing elements 42, 44 over a spring travel of 7 mm for example, is just 90 N or with a low preload around 2 mm is just 160 N.

It is clear herefrom that, on account of the pre-fixing/preloading of the preload element 22, a more uniform force is exerted onto the cooling element 16 when the preload element 22 rests on an uneven surface. This considerably improves the thermal contact to the side 26 to be cooled.

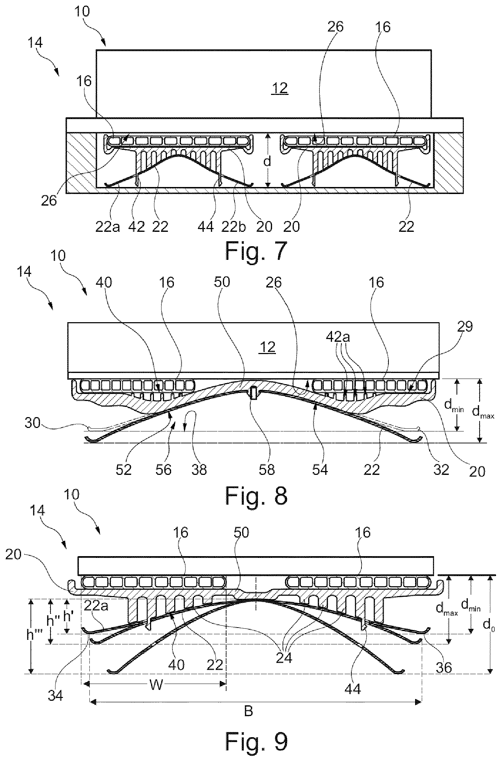

Figure 7 shows a fifth embodiment of the cooling device 14 of a vehicle traction battery sub-assembly 10, the cooling device 14 in this embodiment having two cooling elements 16 separate from one another, which are arranged adjacently at a distance and bear against the same side 26 to be cooled.

The cooling elements 16 are each assigned a carrier element 20 and a preload element 22. The carrier elements 20 and also the preload elements 22 are in this embodiment formed similarly to the embodiment shown in Figure 5.

The cooling device 14 therefore differs in the number of used cooling elements 16, of carrier elements 20 and of preload elements 22.

Figure 8 shows a cooling device 14 of a vehicle traction battery sub-assembly 10, in which a preload element 22 cooperates with a carrier element 20, which simultaneously carries two cooling elements 16 formed separately from one another, which each bear against the side 26 to be cooled.

It is also clear from Figure 8 that the carrier element 20 and the preload element 22 form the pre-assembly unit 56 in that the pre-load element 22 is coupled to the carrier element 20 via a fastening means 58, which can be formed as a clip.

The carrier element 20 has the first flexibility structure 40 on the contact surface 29, as is already known from the first embodiment. Here as well the carrier element 20 itself therefore again has the limit portions 52, 54, in particular on the middle portion 50.

The free ends 30, 32 of the preload element 22 are in this embodiment formed similarly to those in the fourth and fifth embodiment (Figures 5 and 7).

Figure 9 shows a seventh embodiment of the cooling device 14 provided in the case of a vehicle traction battery sub-assembly 10, in which cooling device a carrier element 20 again cooperates with a preload element 22, the carrier element 20 carrying two cooling elements 16 formed separately from one another.

The seventh embodiment is formed similarly to the sixth embodiment, the design of the carrier element 20 being different.

The carrier element 20 and also the preload element 22 in the shown embodiment are formed in a manner similar to the embodiment shown in Figure 5, the middle portion 50 of the carrier element 20 being larger so as to be able to carry two cooling elements 16 at the same time. The common features between the embodiment shown here and that from Figure 5 emerge from the orientation of the first flexibility structure 40 and also the design of the pre-fixing elements 42, 44.

In this embodiment the width B of the preload element 22 between the two bearing portions 34, 36 in the maximally preloaded state with dₘᵢₙ is between twice and three times the width W of a cooling element 16, wherein this is dependent in particular on how large the distance is between the two adjacently arranged cooling elements 16.

With regard to the heights h', h" and h''' of the preload element 22 with the distances dₘᵢₙ, dₘₐₓ and d₀, there are no differences compared with the fourth embodiment.

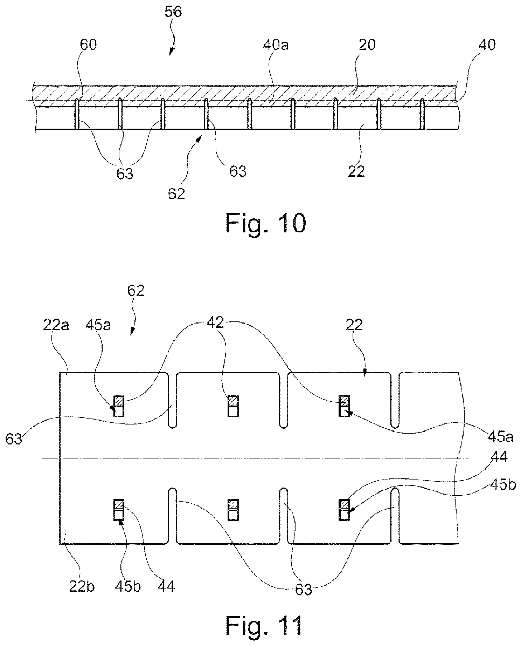

In Figure 10 the sub-assembly comprising the carrier element 20 and the preload element 22 is shown in a side view. Here, this sub-assembly may be the pre-assembly unit 56.

The carrier element 20 in the shown embodiment has the first flexibility structure 40 on the side directed towards the preload element 22.

The fins 40a of the first flexibility structure 40, which extend in the longitudinal direction, are not formed continuously in the longitudinal direction, since recesses 60 are provided, which interrupt the fins 40a in the longitudinal direction. This increases further the flexibility of the carrier element 20, such that this is flexible both in the longitudinal and transverse direction.

The recesses 60 in the carrier element 20 extend in particular over the entire height of the fins 40a.

It is also clear from Figure 10 that the preload element 22 also has a second flexibility structure 62, which is formed by recesses 63 in the transverse direction of the limbs 22a, 22b. This results in numerous limbs 22a, 22b as considered in the longitudinal direction, such that the flexibility of the preload element 22 is likewise increased.

The recesses 60, 63 therefore run transversely to the longitudinal direction of the carrier element 20 and of the preload element 22.

The recesses 60, 63 are repeated regularly, having identical distances in the longitudinal direction, in particular between 40 mm and 160 mm, a smaller distance thus increasing the flexibility.

In particular the recesses 60, 63 are provided in the same cross-sectional planes of the carrier element 20 and of the preload element 22, such that the sub-assembly comprising the carrier element 20 and the preload element 22, in particular the pre-assembly unit 56, is also formed in a flexible manner.

Figure 11 shows a plan view of the underside of a preload element 22, the second flexibility structure 62 formed from the recesses 63 being visible.

The openings 45a, 45b in the preload element 22 or limbs 22a, 22b thereof and also the pre-fixing elements 42, 44 projecting through the openings 45a, 45b can also be seen from this view.

The openings 45 and recesses 63 alternate per limb 22a, 22b, such that a pre-fixing element 42, 44 is assigned to each individual limb 22a, 22b of the preload element 22.

The recesses 63 in particular each have a length that corresponds to approximately 20 % to 40 % of the width W of a cooling element 16 and/or approximately 20 % to 40 % of the width B of the preload unit.

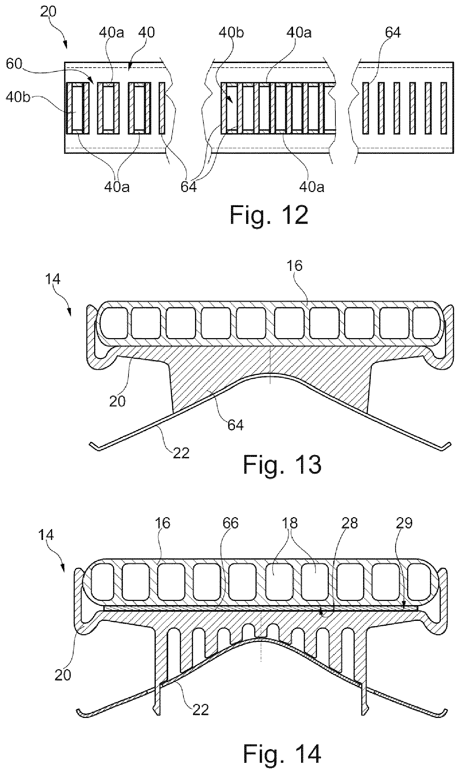

In Figure 12 the carrier element 20 in a certain design and the first flexibility structure 40 provided thereon is illustrated schematically, three portions each with different first flexibility structure 40 being provided. Transverse fins 64 are provided in all three portions.

The first flexibility structure 40 in this embodiment may have fins 40a, which extend in the left part, as considered in a longitudinal direction, from each second transverse fin 64 to the subsequent transverse fin 64. Alternatively the fins 40a can also extend in the longitudinal direction over a number of transverse fins 64 (middle part). The fins 40a are used here to stabilize the transverse fins 64.

Further, however, it may be that no fins 40a at all are provided in the longitudinal direction between the transverse fins 64 (right part).

Corresponding cutouts 40b or recesses 60 are created between the fins 40a and the transverse fins 64, such that the flexibility of the carrier element 20 is guaranteed.

Figure 13 shows a cross section through a cooling device 14 that has a carrier element 20 according to the embodiment shown in Figure 12, the cross section being in the region of a transverse fin 64.

It is clear herefrom that the preload element 22 bears against a transverse fin 64. The preload element 22, as known from Figure 11, itself has a second flexibility structure 62, the recesses 63 being positioned in such a way that the individual limbs 22a, 22b correspond exactly to the width of the transverse fins 64 or a region of transverse fins 64 connected by fins 40a extending in the longitudinal direction, if fins 40a of this type are provided.

The flexibility of the sub-assembly comprising the preload element 22 and the carrier element 20 is thus accordingly high, since the regions between the transverse fins 64 can bend unimpeded. This increases the ability for adaptation to unevennesses.

Figure 14 shows a further embodiment of the cooling device 14, which, in addition to the cooling element 16, also comprises a heating element 66, which is arranged between the carrier element 20 and the cooling element 16.

The heating element 66 is arranged between the contact surface 29 and the effective surface 28, such that the preload element 22 is thermally decoupled from the heating element 66 via the carrier element 20.

The carrier element 20 and the preload element 22 are formed similarly to the embodiment shown in Figure 5.

The heat generated by the heating element 66 is used to heat the battery cells of the battery module 12 (not illustrated here) when the ambient temperature is very low. The battery cells are thus always in the optimal working range. The heat is transported to the battery module 12 via the structure of the cooling element 16, in particular via the intermediate walls between the individual channels 18.

The heating element 66 can be embedded in particular in the carrier element 20, such that the assembly process is facilitated, since the heating element 66 does not have to first be placed between the carrier element 20 and the cooling element 16.

With the cooling device 14 according to the invention a high degree of flexibility of the cooling device 14 is achieved, whereby a very good thermal contact between the least one cooling element 16 and the side 26 to be cooled of the battery module 12 is provided in a lasting manner. This good thermal contact does not deteriorate over time on account of the decoupling of the preload element 22 and is additionally independent of a varying distance between the side 26 to be cooled of the battery module 12 and the side 38 of the battery outer housing, on which the preload element 22 is supported.

## Claims

1. Cooling device (14) for cooling a battery, in particular a vehicle traction battery, having at least one cooling element (16), through which a cooling fluid for transporting away thermal energy flows, and having a preload element (22) and a carrier element (20), which has a contact surface (29) for contacting the cooling element (16), the preload element (22) loading the carrier element (20) on the side opposite the contact surface (29), and the carrier element (20) being formed from a material that has a lower thermal conductivity than the material from which the preload element (22) is formed, **characterized in that** at least one pre-fixing element (42, 44) is provided, which cooperates with the preload element (22) in such a way that the preload element (22) is pre-fixed, and **in that** the at least one pre-fixing element (42, 44) has a hook-shaped portion (46, 48) for pre-fixing the preload element (22) and **in that** the preload element (22) has, in the region of the pre-fixing elements (42, 44), an opening (45a, 45b) in respective limb (22a, 22b), such that an edge of the respective opening (45a, 45b) co-operates with the hook-shaped portion (46, 48).

2. Cooling device (14) according to Claim 1, **characterized in that** the thermal conductivity of the material of the carrier element (20) is less than 50 % of the thermal conductivity of the material from which the preload element (22) is formed.

3. Cooling device (14) according to Claim 1 or 2, **characterized in that** the carrier element (20) is arranged between the cooling element (16) and the preload element (22).

4. Cooling device (14) according to one of the preceding claims, **characterized in that** the carrier element (20) is coupled to the preload element (22), and in particular forms a pre-assembly unit (56).

5. Cooling device (14) according to one of the preceding claims, **characterized in that** the carrier element (20) has a first flexibility structure (40) and/or the preload element (22) has a second flexibility structure (62).

6. Cooling device (14) according to Claim 5, **characterized in that** the first and/or second flexibility structure (40, 62) have/has cutouts (40b) and/or fins (40a, 64) and/or recesses (60).

7. Cooling device (14) according to one of the preceding claims, **characterized in that** the preload element (22) has at least one bearing portion (34, 36), in particular two bearing portions (34, 36), which bear against a side (38) of a battery outer housing.

8. Cooling device (14) according to Claim 7, **characterized in that** the preload element (22) has two free ends (30, 32), which are bent over in such a way that they form the bearing portions (34, 36), the free ends being bent in particular in the direction towards one another.

9. Cooling device (14) according to one of the preceding claims, **characterized in that** the at least one pre-fixing element (42, 44) is arranged on the carrier element (20), in particular on the side opposite the contact surface (29).

10. Cooling device (14) according to one of the preceding claims, **characterized in that** the carrier element (20) and/or the at least one pre-fixing element (42, 44) have/has at least one limit element (52, 54) for limiting a compression of the preload element (22).

11. Cooling device (14) according to one of the preceding claims, **characterized in that** at least one heating element (66) is provided.

12. Cooling device (14) according to Claim 11, **characterized in that** the heating element (66) is arranged between the carrier element (20) and the cooling element (16).

13. Cooling device (14) according to Claim 12, **characterized in that** the cooling element is embedded in the carrier element (20).

14. Cooling device (14) according to one of the preceding claims, **characterized in that** a number of cooling elements (16) separate from one another are provided, which are assigned at least one carrier element (20) and at least one preload element (22).

## Patentansprüche

1. Kühlvorrichtung (14) zum Kühlen einer Batterie, insbesondere einer Fahrzeugtraktionsbatterie, die wenigstens ein Kühlelement (16) aufweist, durch das ein Kühlmittel zum Abtransportieren thermischer Energie strömt, und ein Vorspannelement (22) und ein Trägerelement (20) aufweist, das eine Kontaktfläche (29) zum Berühren des Kühlelements (16) aufweist, wobei das Vorspannelement (22) das Trägerelement (20) auf der der Kontaktfläche (29) gegenüberliegenden Seite vorspannt und das Trägerelement (20) aus einem Material gebildet ist, das eine niedrigere Wärmeleitfähigkeit als das Material aufweist, aus dem das Vorspannelement (22) gebildet ist, **dadurch gekennzeichnet, dass** wenigstens ein Vorbefestigungselement (42, 44) vorgesehen ist, das auf eine solche Weise mit dem Vorspannelement (22) zusammenwirkt, dass das Vorspannelement (22) vorbefestigt ist, und dass das wenigstens eine Vorbefestigungselement (42, 44) einen hakenförmigen Abschnitt (46, 48) zum Vorbefestigen des Vorspannelements (22) aufweist und dass das Vorspannelement (22) im Bereich der Vorbefestigungselemente (42, 44) eine Öffnung (45a, 45b) in einem entsprechenden Glied (22a, 22b) auf eine solche Weise aufweist, dass ein Rand der entsprechenden Öffnung (45a, 45b) mit dem hakenförmigen Abschnitt (46, 48) zusammenwirkt.

2. Kühlvorrichtung (14) nach Anspruch 1, **dadurch gekennzeichnet, dass** die Wärmeleitfähigkeit des Materials des Trägerelements (20) unter 50 Prozent der Wärmeleitfähigkeit des Materials liegt, aus dem das Vorspannelement (22) gebildet ist.

3. Kühlvorrichtung (14) nach Anspruch 1 oder 2, **dadurch gekennzeichnet, dass** das Trägerelement (20) zwischen dem Kühlelement (16) und dem Vorspannelement (22) angeordnet ist.

4. Kühlvorrichtung (14) nach einem der vorhergehenden Ansprüche, **dadurch gekennzeichnet, dass** das Trägerelement (20) mit dem Vorspannelement (22) gekoppelt ist und insbesondere eine Vormontageeinheit (56) bildet.

5. Kühlvorrichtung (14) nach einem der vorhergehenden Ansprüche, **dadurch gekennzeichnet, dass** das Trägerelement (20) eine erste Flexibilitätsstruktur (40) aufweist und/oder das Vorspannelement (22) eine zweite Flexibilitätsstruktur (62) aufweist.

6. Kühlvorrichtung (14) nach Anspruch 5, **dadurch gekennzeichnet, dass** die erste und/oder die zweite Flexibilitätsstruktur (40, 62) Aussparungen (40b) und/oder Rippen (40a, 64) und/oder Ausnehmungen (60) aufweisen/aufweist.

7. Kühlvorrichtung (14) nach einem der vorhergehenden Ansprüche, **dadurch gekennzeichnet, dass** das Vorspannelement (22) wenigstens einen Lagerabschnitt (34, 36), insbesondere zwei Lagerabschnitte (34, 36), die an einer Seite (38) eines Batterieaußengehäuses anliegen, aufweist.

8. Kühlvorrichtung (14) nach Anspruch 7, **dadurch gekennzeichnet, dass** das Vorspannelement (22) zwei freie Enden (30, 32) aufweist, die auf eine solche Weise umgebogen sind, dass sie die Lagerabschnitte (34, 36) bilden, wobei die freien Enden insbesondere in der Richtung aufeinander zu gebogen sind.

9. Kühlvorrichtung (14) nach einem der vorhergehenden Ansprüche, **dadurch gekennzeichnet, dass** das wenigstens eine Vorbefestigungselement (42, 44) auf dem Trägerelement (20), insbesondere auf der der Kontaktfläche (29) gegenüberliegenden Seite, angeordnet ist.

10. Kühlvorrichtung (14) nach einem der vorhergehenden Ansprüche, **dadurch gekennzeichnet, dass** das Trägerelement (20) und/oder das wenigstens eine Vorbefestigungselement (42, 44) wenigstens ein Begrenzungselement (52, 54) zum Begrenzen einer Kompression des Vorspannelements (22) aufweisen/aufweist.

11. Kühlvorrichtung (14) nach einem der vorhergehenden Ansprüche, **dadurch gekennzeichnet, dass** wenigstens ein Heizelement (66) vorgesehen ist.

12. Kühlvorrichtung (14) nach Anspruch 11, **dadurch gekennzeichnet, dass** das Heizelement (66) zwischen dem Trägerelement (20) und dem Kühlelement (16) angeordnet ist.

13. Kühlvorrichtung (14) nach Anspruch 12, **dadurch gekennzeichnet, dass** das Kühlelement in dem Trägerelement (20) eingebettet ist.

14. Kühlvorrichtung (14) nach einem der vorhergehenden Ansprüche, **dadurch gekennzeichnet, dass** eine Anzahl von voneinander getrennten Kühlelementen (16) vorgesehen ist, denen wenigstens ein Trägerelement (20) und wenigstens ein Vorspannelement (22) zugeordnet sind.

## Revendications

1. Dispositif de refroidissement (14) pour refroidir une batterie, en particulier une batterie de traction de véhicule, présentant au moins un élément de refroidissement (16), à travers lequel un fluide de refroidissement pour éloigner l'énergie thermique s'écoule, et présentant un élément de précharge (22) et un élément de support (20), qui présente une surface de contact (29) pour entrer en contact avec l'élément de refroidissement (16), l'élément de précharge (22) chargeant l'élément de support (20) sur le côté opposé à la surface de contact (29), et l'élément de support (20) étant formé à partir d'un matériau dont la conductivité thermique inférieure à celle du matériau à partir duquel l'élément de précharge (22) est formé, **caractérisé en ce qu'**au moins un élément de préfixation (42, 44) est prévu, qui coopère avec l'élément de précharge (22) de telle manière que l'élément de précharge (22) soit préfixé, et **en ce que** ledit au moins un élément de préfixation (42, 44) présente une partie en forme de crochet (46, 48) pour préfixer l'élément de précharge (22), et **en ce que** l'élément de précharge (22) comporte, dans la région des éléments de préfixation (42, 44), une ouverture (45a, 45b) dans une branche respective (22a, 22b), de telle sorte qu'un bord de l'ouverture respective (45a, 45b) coopère avec la partie en forme de crochet (46, 48).

2. Dispositif de refroidissement (14) selon la revendication 1, **caractérisé en ce que** la conductivité thermique du matériau de l'élément de support (20) est inférieure à 50 % de la conductivité thermique du matériau à partir duquel l'élément de précharge (22) est formé.

3. Dispositif de refroidissement (14) selon la revendication 1 ou 2, **caractérisé en ce que** l'élément de support (20) est agencé entre l'élément de refroidissement (16) et l'élément de précharge (22).

4. Dispositif de refroidissement (14) selon l'une quelconque des revendications précédentes, **caractérisé en ce que** l'élément de support (20) est couplé à l'élément de précharge (22), et forme en particulier une unité préassemblée (56).

5. Dispositif de refroidissement (14) selon l'une quelconque des revendications précédentes, **caractérisé en ce que** l'élément de support (20) présente une première structure de flexibilité (40) et/ou l'élément de précharge (22) présente une seconde structure de flexibilité (62).

6. Dispositif de refroidissement (14) selon la revendication 5, **caractérisé en ce que** la première et/ou la seconde structure(s) de flexibilité (40, 62) comporte/comportent des découpes (40b) et/ou des ailettes (40a, 64) et/ou des évidements (60).

7. Dispositif de refroidissement (14) selon l'une quelconque des revendications précédentes, **caractérisé en ce que** l'élément de précharge (22) présente au moins une partie de palier (34, 36), en particulier deux parties de palier (34, 36), qui portent contre un côté (38) d'un carter extérieur de batterie.

8. Dispositif de refroidissement (14) selon la revendication 7, **caractérisé en ce que** l'élément de précharge (22) présente deux extrémités libres (30, 32), qui sont repliées de manière à former les parties de palier (34, 36), les extrémités libres étant pliées en particulier dans la direction l'une vers l'autre.

9. Dispositif de refroidissement (14) selon l'une quelconque des revendications précédentes, **caractérisé en ce que** l'au moins un élément de préfixation (42, 44) est agencé sur l'élément de support (20), en particulier sur le côté opposé à la surface de contact (29).

10. Dispositif de refroidissement (14) selon l'une quelconque des revendications précédentes, **caractérisé en ce que** l'élément de support (20) et/ou l'au moins un élément de préfixation (42, 44) présente/présentent au moins un élément de limitation (52, 54) pour limiter une compression de l'élément de précharge (22).

11. Dispositif de refroidissement (14) selon l'une quelconque des revendications précédentes, **caractérisé en ce qu'**au moins un élément de chauffage (66) est prévu.

12. Dispositif de refroidissement (14) selon la revendication 11, **caractérisé en ce que** l'élément de chauffage (66) est agencé entre l'élément de support (20) et l'élément de refroidissement (16).

13. Dispositif de refroidissement (14) selon la revendication 12, **caractérisé en ce que** l'élément de refroidissement est incorporé dans l'élément de support (20) .

14. Dispositif de refroidissement (14) selon l'une quelconque des revendications précédentes, **caractérisé en ce qu'**un certain nombre d'éléments de refroidissement (16) séparés les uns des autres sont prévus, lesquels sont associés à au moins un élément de support (20) et au moins un élément de précharge (22).
